# EUROPEAN PATENT APPLICATION

(11) **EP 2 668 994 A1**
(43) Date of publication of application: **04.12.2013**
(21) Application number: 13169582.7
(22) Date of filing: 28.05.2013
(51) Int. Cl.: B01D 53/14

(54) **Integrated CO2 phase changing absorbent for CO2 separation system**

(30) Priority: 31.05.2012 US 201213484298
(71) Applicant: General Electric Company, Schenectady, New York 12345 (US)
(72) Inventor: VIPPERLA, Ravikumar, Greenville, SC South Carolina 29615 (US)
(74) Representative: Szary, Anne Catherine

(57) **Abstract**

A method and system (20) for removing carbon dioxide from a power plant exhaust (such as a power plant, coal boilers, natural gas combined cycle plants or a gas turbine engine exhaust), where the method includes the steps of contacting the exhaust gas (21) with a lean amino-silicone absorbent in an absorber (25), with the absorbent being sufficient in amount and concentration to react with a substantial portion of the carbon dioxide present in the exhaust gas; forming a liquid/solids slurry (26) comprising unreacted amino-silicone absorbent and solid carbamates resulting from the reaction of the absorbent with carbon dioxide; heating the slurry in a desorber (40) to a temperature sufficient to effectively strip the carbon dioxide from the carbamates; regenerating lean amino-silicone absorbent as a recycle stream (47) back to the absorber; and sequestering the desorbed carbon dioxide gas.

## Description

### BACKGROUND OF THE INVENTION

The present invention relates to a process for capturing carbon dioxide (CO₂) from effluent gas streams containing a mixture of waste constituents and, in particular, to an integrated method and system for separating and capturing carbon dioxide gas emissions using a phase changing absorbent material that significantly increases the efficiency of the CO₂ separation.

The emission of carbon dioxide and carbon monoxide into the atmosphere from industrial sources such as power plants that rely on fossil fuels is considered a principal cause of the "greenhouse effect" contributing to global warming. As a result, in recent years, various processes have been proposed in an effort to reduce CO₂ emissions, particularly in industrial applications. Some known processes for removing CO₂ from an effluent exhaust stream include chemical absorption, inorganic membrane permeation (designed to physically separate CO₂ from other waste constituents), molecular sieves, cryogenic separation and processes that "scrub" chemical waste streams using an absorbent which either reacts with or has a physical affinity for CO₂.

One absorption technique that has received recent attention as a viable method for removing CO₂ from flue gas streams, particularly exhaust gas produced by coal fired power plants, relies on the use of aqueous monoethanolamine (MEA) and/or "hindered" amines, such as methyldiethanolamine (MDEA) and 2-amino-2-methyl-1-propanol (AMP) as the solvents in an absorption/stripping regenerative process. An example of an MEA process can be found in commonly-owned U.S. Patent No. 8,007,570 (entitled "Systems, Methods and Apparatus for Capturing CO₂, using a solvent"). In recent times, MEA and/or hindered amine-based absorption processes have become more popular because of the potential separation efficiency of amine absorbents in a CO₂-rich environment. However, a number of inherent deficiencies have been found to exist in MEA-based processes that prevent the known amine-absorption technology from becoming more widely adopted.

For example, MEA processes invariably result in significant increases in the viscosity of the liquid absorbent after extended periods of use, often resulting in clogging of fluid transport systems and/or major pieces of process equipment. Over time, the actual and potential reductions in separation efficiency adversely affect the entire CO₂ separation, particularly after extended periods of operation. In order to avoid clogging problems, the concentration of MEA must be maintained at a relatively low level, e.g., at or below about 30 percent by weight. The lower concentrations reduce the absorption capacity of the system as compared to the theoretical capacity of the absorbent. The relatively low MEA concentrations also result in much greater process and equipment costs and significantly lower the overall CO₂ treatment efficiency.

The amount of energy consumed in an MEA-based process can also be prohibitively high due to the need for an effective solvent carrier (normally water) required as part of the separation and regeneration process. The MEA/water absorbent must undergo heating and evaporation in order to effectively separate and recover the MEA. Most regeneration processes recover the water carrier by heating the mixture using combustion fuels. The known MEA regeneration processes also have a high potential to cause corrosion and degradation of process equipment over time. Although corrosion-resistant materials and inhibitors can reduce corrosion, they often increase the capital and operational costs. Many known absorption systems using MEA also suffer from long-term thermal stability of the MEA in the presence of oxygen, particularly in environments where the regeneration temperatures approach or exceed about 120°C. Hindered MEA systems likewise exhibit a tendency to acidify other solvents present in the system, which in turn decreases their alkalinity available for CO₂ capture.

Another limitation of MEA-based systems concerns the processing of large volumes of flue gas containing CO and CO₂ emissions produced by commercial and industrial power plants, coal plants or gas turbine engines. Typically, the flue gas streams include CO₂, H₂O, O₂, N₂, Argon, CH₄, CO, SO_{X}, NO_{X}, C₂H₆ and possibly minor amounts of other hydrocarbons. Scaling a MEA-based CO₂ capture system to the size required for such plants results in significant increases in the overall cost of electricity for the plant, making MEA-based CO₂ capture an unlikely choice for large-scale commercialization. Thus, previous attempts to efficiently remove CO₂ from industrial exhaust streams using MEA have proven to be prohibitively expensive to construct and operate and only marginally effective from a process engineering standpoint.

A need therefore still exists for a method that achieves a high net CO₂ removal efficiency using reduced amounts of an amine-based carrier absorbent, thereby providing lower capital and operating costs. Preferably, any such technology should rely on a lower heat of reaction than prior art MEA systems, resulting in less energy to release the CO₂ from the absorbent. It would also be preferable to eliminate the need for any pre-capture compression of gas to be treated so that a high net CO₂ capacity can be achieved at lower CO₂ partial pressures, reducing the energy required for capture. Any acceptable amine-based technology should also exhibit low levels of corrosion and operate without significant cooling to achieve the required net CO₂ loading. Finally, in order to be commercially viable, the technology should be lower in cost than conventional systems and utilize materials having low volatility, high thermal stability and a high net capacity for removing CO₂.

As detailed below, the CO₂ capture system according to the invention achieves many of the above objectives and significantly lowers the cost of CO₂ removal while improving the operating efficiency of the amine-based process. In essence, the process integrates the amine absorber, desorber, heat exchanger, pumps and recycle loops in a manner that maximizes the efficiency of CO₂ removal at a much lower cost. The new process also uses a combination of lean and rich amino-silicone solvents (referred to herein as "amino-silicone absorbents") capable of removing CO₂ more efficiently from a variety of different exhaust gas streams (including exhaust streams that can be characterized as "waste" gas streams) under a wide range of process conditions. The system also does not adversely affect power generation processes upstream or downstream of the integrated CO₂ removal system. The invention can thus be used to treat the flue gas compositions from coal boilers, natural gas combined cycle plants without exhaust gas recirculation ("EGR"), natural gas combined cycle plants with EGR, as well as other industrial applications.

### BRIEF DESCRIPTION OF THE INVENTION

As detailed below, the invention provides a method for removing carbon dioxide from an exhaust gas stream where the major process components are integrated in a manner that significantly reduces the required amount of a regenerated amine-based carrier absorbent. The new process also results in thermal efficiencies that reduce the capital and operating costs of the entire system because less energy is required to capture and release CO₂ from the absorbent.

An exemplary method includes a first step of contacting an exhaust gas stream containing carbon dioxide (such as a gas turbine exhaust) with a lean amino-silicone absorbent that is fed to an absorber. The amino-silicone absorbent is sufficient in amount and concentration to react with a substantial portion of the carbon dioxide to form solid carbamate particulates and nominally includes a liquid fraction that forms a slurry containing the solid particulates and capable of being pumped. The process thus includes the steps of forming a slurry comprising the unreacted amino-silicone absorbent and particularized solid carbamates; releasing "clean" exhaust gas without carbon dioxide from the absorber; heating the unreacted absorbent stream and particularized carbamates in a desorber to thermally strip the carbon dioxide from the carbamates; regenerating a lean amino-silicone absorbent; and capturing and releasing the desorbed carbon dioxide gas.

### BRIEF DESCRIPTION OF THE DRAWINGS

FIG. 1 is a process flow diagram depicting a first exemplary embodiment of the invention showing the major pieces of process equipment and flow configuration for capturing CO₂ from an exemplary exhaust stream;
FIG. 2 is a process flow diagram depicting a first alternative embodiment of the invention, again depicting the major pieces of process equipment and flow configuration for capturing CO₂ from an exhaust stream;
FIG. 3 is a process flow diagram depicting a third embodiment of the invention, again showing the major pieces of process equipment and modified flow configuration for the alternative embodiment;
FIG. 4 is a general process flow diagram depicting the major pieces of equipment and flow configuration that includes an exemplary CO₂ separation unit and phase changing absorbents integrated with a natural gas plant and exhaust gas recirculation (EGR) loop;
FIG. 5 is a graph illustrating the energy penalty (in the form of a "water fall-type" bar chart) for a 90% carbon capture and sequestration system using a traditional prior art monoethanol amine (MEA) process for treating a post combustion stream discharged from a pulverized coal plant; and
FIG 6 is a chart depicting the cost of energy differential savings (again in the form of a comparative water fall chart) for exemplary embodiments of the invention using the integrated amino-silicone absorbent and process flow configurations described herein.

### DETAILED DESCRIPTION OF THE INVENTION

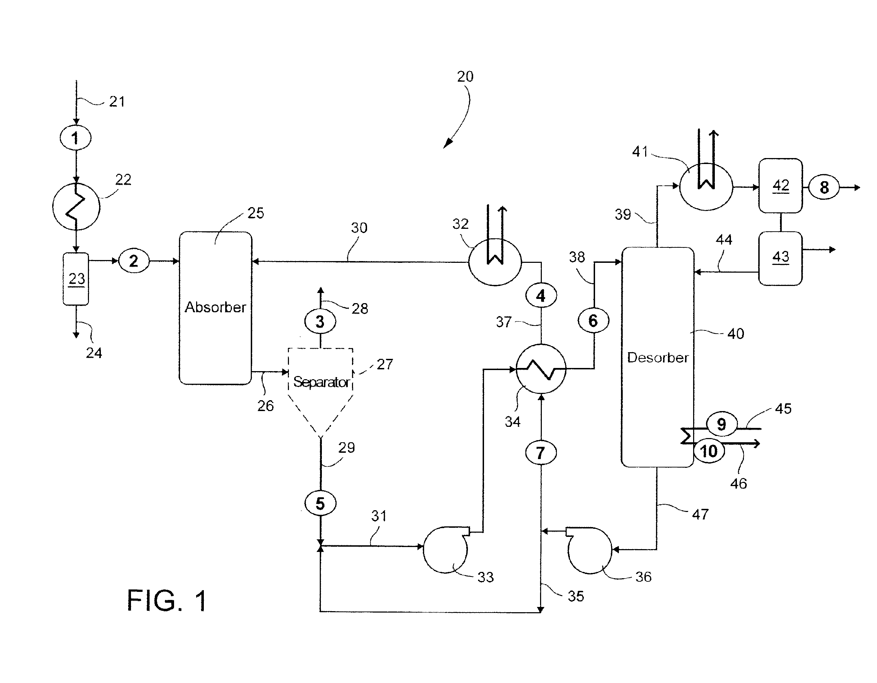

FIGS. 1 through 6, taken together, illustrate the manner in which an exemplary CO₂ separation unit according to the invention uses thermal integration of major pieces of process equipment to isolate and recover CO₂, while regenerating the amino-silicone absorbent in a more efficient and cost effective manner. That is, the absorber, desorber, pumps and heat exchangers are arranged in an optimum manner to maximize the efficiency of the process and minimize and/or altogether avoid the energy penalties encountered in prior art systems.

Because the exemplary integrated CO₂ separation units are capable of using different phase changing CO₂ absorbents they can be used in several different applications, including, for example (1) separating CO and CO₂ components in the flue gas of natural gas and hydrocarbon fuel-based power plants; (2) isolating CO₂ in syngas discharged from gasifiers; (3) separating CO₂ from the exhaust gas streams released from natural gas and oil field wells; (4) removing CO₂ from flue gas in gas turbine engine exhausts; or (5) separating CO₂ from exhaust streams during enhanced oil recovery systems. The thermally integrated CO₂ separation unit according to the invention can be used with or without exhaust gas recirculation (EGR).

In the different embodiments described below, the CO₂ separation unit captures a substantial fraction of the CO₂ in the absorber where the absorbent is heated and recovered and the CO₂ released and sequestered. The CO₂ separation also relies on the effective consolidation and integration of the absorber and desorber units with related heat exchanger units and transport systems for the absorbent as it moves from the absorber to the desorber and back again to the absorber. The absorber and desorber subsystems are thereby thermally integrated. In an alternative embodiment described below, a portion of lean absorbent can be combined with a corresponding portion of the rich absorbent stream to thereby improve the overall thermal efficiency of the entire CO₂ separation process.

As noted above, FIG. 1 is a process flow diagram depicting a first exemplary embodiment of the invention showing the major pieces of process equipment and flow configuration for capturing and removing CO₂ from a process exhaust stream. In the integrated CO₂ separation system 20, an exhaust gas stream containing CO₂ is treated such that virtually all of the CO₂ being captured using four thermally integrated processes, namely CO₂ absorption, CO₂ desorption, absorbent handling, and CO₂ compression. Flue gas 21 (e.g., the exhaust gas from a power plant or gas turbine engine) feeds into direct contact cooler 22 (see process point 1), which reduces the flue gas temperature down to about 90°F. The composition of the flue gas being fed to direct contact cooler 22 and thereafter to absorber 25 nominally includes carbon dioxide, water, oxygen, nitrogen, argon, methane, carbon monoxide, SOₓ, NOₓ, ethane and minor amounts of higher molecular weight hydrocarbons. The water feed to direct contact cooler 22 sprays directly onto the flue gas to initially cool (quench) the gas. Lowering the flue gas temperature upstream of the absorber also allows entrained water vapor to be removed from the flue gas, rendering the system more thermally efficient.

The lower temperature flue gas containing CO₂ is separated from the liquid coolant 24 in flue gas separator 23 and feeds directly into absorber 25 as shown (see process point 2). Lean absorbent 30 being fed to the top of the absorber captures most of the CO₂ in the flue gas, with CO₂-enriched absorbent 26 discharged from absorber 25 nominally in the form of a slurry containing solid carbamates together with unreacted absorbent, if any. The lean absorbent 30 fed to absorber 25 comprises an amino-silicone absorbent which reacts with the carbon dioxide present in the flue gas to form carbamates.

The bottoms stream from absorber 25, which includes CO₂-enriched absorbent 26, feeds directly into a cyclone separator 27 (which is optional, depending upon the exact composition of the bottoms stream being discharged from absorber 26), and nominally includes at least some amino-silicone absorbent and resulting carbamates, with the amount of free carbon dioxide significantly reduced. The bottoms stream from cyclone separator 27 thus typically comprises a slurry having some unreacted liquid absorbent and particularized solid carbamates. A relatively clean flue gas stream 28 with significantly reduced amounts of CO₂ is then discharged from cyclone separator 27 as shown.

The following reaction represents one example of the reversible reaction taking place in the absorber:

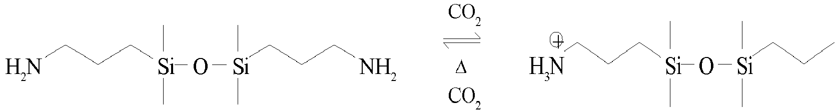

Various different amino-silicone absorbent compositions can be used to carry out the process steps as described herein. In general, the family of amino-silicone absorbents useful in the invention comprise liquid, nonaqueous oligomeric compositions, for example those having between two and twenty repeat units. The oligomeric materials with low vapor pressure are functionalized with groups that either react reversibly with, or have a high affinity for, CO₂. The useful absorbents exhibit a plurality of properties necessary to an economically feasible alternative to MEA-based capture, e.g., they are liquid through a large range of temperatures, non-volatile, thermally stable, and do not necessarily require a carrier fluid. In addition, the absorbents can be provided with a high CO₂ capacity via synthesis that results in a higher degree of functionality. Preferably, the absorbent comprises a CO₂-philic, short chain oligomers, e.g., comprising less than about 20 repeating, monomeric units. Exemplary amino-silicones particularly suited for use in the invention are described in commonly-owned U.S. application publication No. 2010/0154431.

The composition of the bottoms stream from absorber 25, i.e., CO₂-enriched absorbent 26 as fed from the absorber to cyclone separator 27 (which as noted above can be optional), nominally includes carbon dioxide, water, oxygen, nitrogen, argon, methane, carbon monoxide, SOₓ, NOₓ, ethane, minor amounts of other hydrocarbons, as well as some amino-silicone absorbent and the resulting carbamates, with the amount of free carbon dioxide now significantly reduced. The bottoms stream, i.e., enriched absorbent 29, comprises a slurry containing unreacted liquid absorbent and particularized solid carbamates (see process point 5), and thus the solution will be "rich" in carbamates formed during the above reaction. The "rich" stream includes unreacted amino-silicone absorbent and carbamates (which will be much higher in amount as compared to the amount of residual carbamates in the "lean" absorbent described below). A "clean" flue gas stream 28 (i.e., with significantly reduced amounts of CO₂) is discharged from cyclone separator 27 as shown (see process point 3).

The degree of "rich solvent loading" taking place in absorber 25 to remove CO₂ is defined as the weight percent of carbon dioxide that leaves the absorber column in the form of a CO₂-enriched slurry 26 of carbamates and unreacted amino-silicone absorbent. The "solvent net loading" for the system is defined as the difference between the rich loading and the lean loading and can be determined through laboratory analysis of the two different streams. Nominally, the absorber column will include a spray tower, however other equally effective designs, such as a distillation column, can be used, depending in part on the amount carbon dioxide to be stripped and captured. The CO₂ absorption process increases the temperature of the absorbent by approximately 20-40°F, and in the embodiment of FIG. 1 the absorber operates at temperatures in the range of 100-150°F at approximately atmospheric pressure.

Following the absorption step, enriched absorbent 29, i.e., containing most of the CO₂ discharged from the absorber in the form of particularized carbamates is mixed with a small portion of lean absorbent from the desorber (which is increased in temperature) and the pressure of rich/lean slurry mixture 31 is increased by slurry pump 33 as shown.

The CO₂-enriched absorbent stream containing carbamates as discharged from slurry pump 33 feeds directly into combined rich-lean heat exchanger 34 and then heated to a temperature in the range of 200-300°F before being fed to desorber 40 (see process point 6). In the embodiment of Figure 1, the lean absorbent is hot when mixed with the rich absorbent, with the mixture being pumped at high pressure and fed to rich-lean heat exchanger 34 (see process point 7). The cooled lean absorbent stream 30 leaving heat exchanger 34 (see process point 4) passes through lean absorbent cooler 32 (nominally with cooling water on the tube side) to become the primary lean absorbent feed to absorber 25.

As noted above, desorber 40 operates to separate the absorbed CO₂ as discussed above. Lean absorbent stream 47 from the bottom of desorber 40 passes through the opposite side of the rich-lean heat exchanger 34, nominally on the shell side. The "solvent lean loading" taking place in desorber 40 is thus defined as the weight percent of carbon dioxide in lean absorbent 47 leaving the desorber column as feed to lean recycle pump 36. The discharge from lean absorbent pump 36 is used on the shell side of rich-lean heat exchanger 34 (see process point 7). A portion of the discharge from lean absorbent pump 36 can also be fed to slurry pump 33 as lean absorbent recycle 35 as shown in dotted line format.

Steam supplied to the desorber via steam feed line 45 provides the heat necessary to release (strip) CO₂ from the enriched absorbent (see process point 9). Steam useful in carrying out the embodiment of FIG. 1 could originate, for example, from the lower pressure section of a steam turbine in a power plant sub-system. The resulting condensate 46 is discharged from desorber 40 as indicated (see process point 10).

Meanwhile, hot vapor 39 (which includes steam and CO₂) becomes cooled in the CO₂ heat exchanger 41 using water as the cooling medium, nominally on the tube side. The remaining steam with entrained CO₂ flows to CO₂/Steam separator 42 where the vapor and entrained liquid are separated. The CO₂ gas is then removed from the separator and delivered to a CO₂ product compressor (see process point 8). The liquid from the bottom of separator CO₂/Steam separator 42 feeds into absorbent separator 43 as shown, with "clean" absorbent recycle 44 fed to the top of desorber 40. The "clean flue gas" leaving CO₂/Steam separator 42 will have a composition similar to that of the original flue gas feed to the system, but with a significantly reduced amount of carbon dioxide in the final stream.

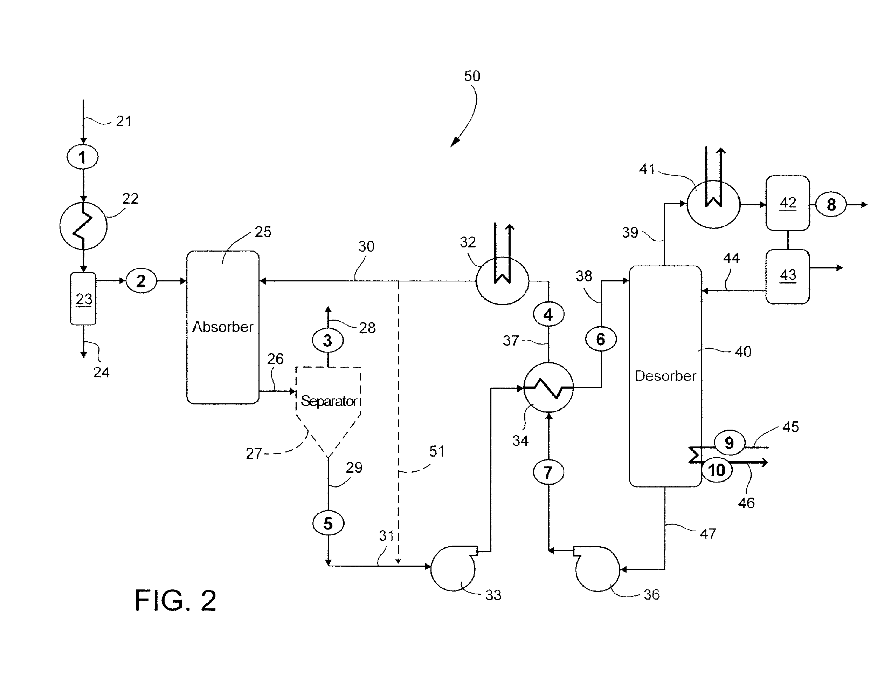

FIG. 2 is a process flow diagram depicting an alternative embodiment of the invention (shown generally as second embodiment 50), again showing the major pieces of process equipment and flow configuration for capturing CO₂ in a more efficient manner. For ease of reference, the same basic hardware components and process streams have been assigned common numbers as used above in connection with FIG. 1. However, unlike the FIG. 1 embodiment, in Figure 2 the lean absorbent from desorber 40 is cooled in rich-lean heat exchanger 34 and thereafter in lean absorbent cooler 32 (see process points 7 and 4). The cooled flow downstream of lean absorbent cooler 32 is recycled through lean absorbent recycle line 51 shown in dotted line format to indicate that the process line is optional, and mixed with the rich absorbent being fed to slurry pump 33. The mixture is then pumped at high pressure into rich-lean heat exchanger 34.

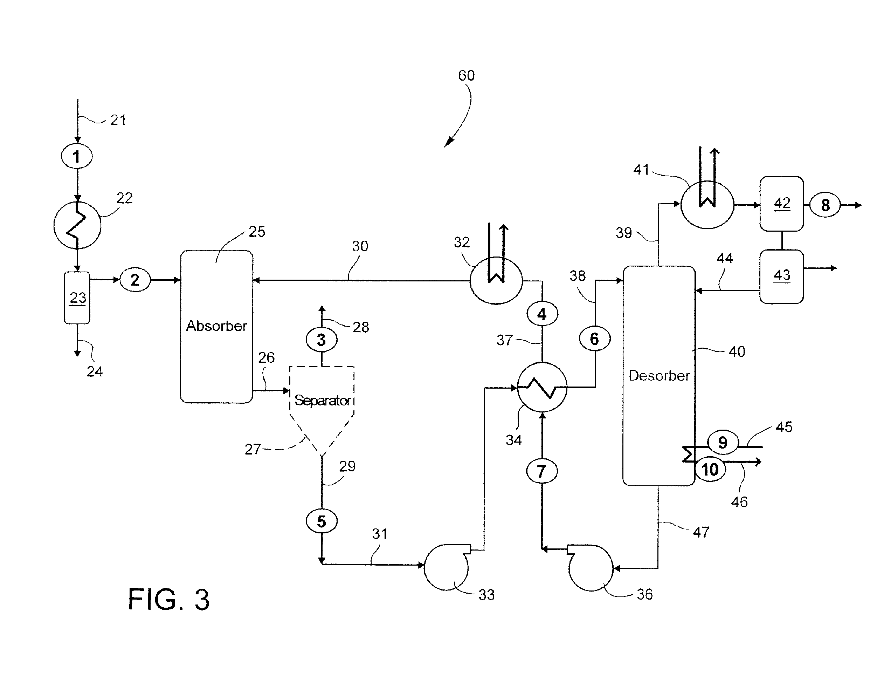

FIG. 3 is a process flow diagram depicting another alternative embodiment (shown generally as third embodiment 60), again showing the major pieces of process equipment as identified above in FIGs. 1 and 2, but with a slightly different flow configuration. In the embodiment of Figure 3, the lean absorbent recycle stream 51 in FIG. 2 has been eliminated and the flow rates of the absorbent streams moving between absorber 25 and desorber 40 increased to a level sufficient to carry any entrained solids from the absorber directly to the desorber as shown.

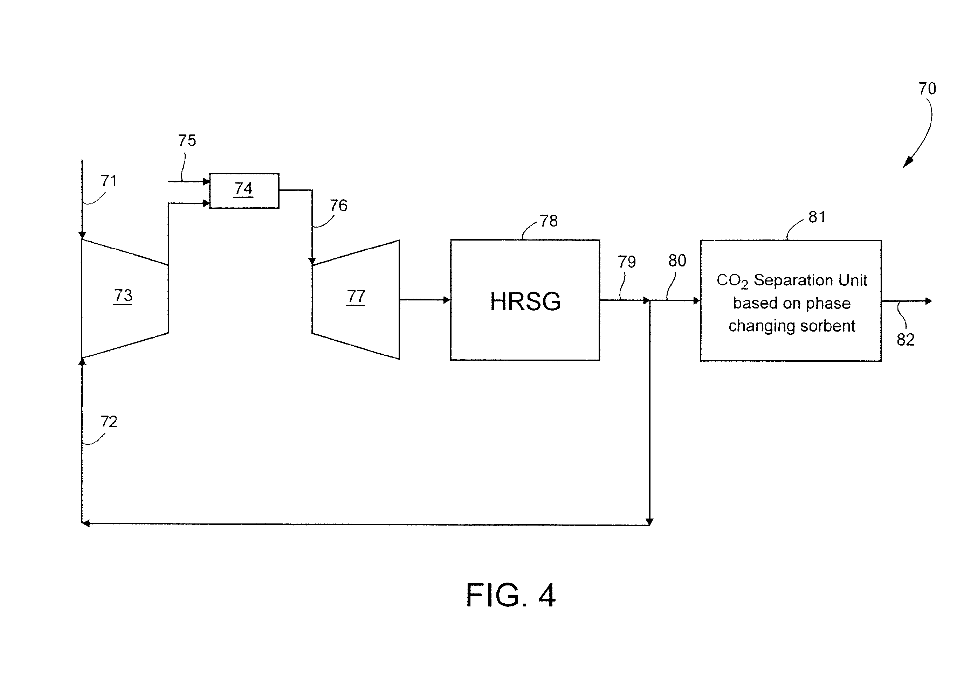

FIG. 4 is a general process flow diagram depicting the major pieces of equipment and flow configuration that include an exemplary CO₂ separation unit 81 using phase changing absorbents as integrated, for example, with a natural gas plant and exhaust gas recirculation (EGR) loop 72. In FIG. 4, ambient air feed 71 is compressed in compressor 73 and fed directly into one or more gas combustors using hydrocarbon fuel 75. Combustor exhaust 76 containing substantial amounts of CO₂ drive gas turbine 77. Residual heat energy and work are recovered using a heat recovery steam generator 78, which in turn feeds into an integrated CO₂ separation unit 81 of the type described above in connection with FIGs. 1-3. A portion of the exhaust gas recycle stream 79 from heat recovery steam generator 78 is recycled back to one or more stages of compressor 73, with the balance of spent exhaust gas 80 being treated in the CO₂ separation system described above. The separated CO₂ stream is discharged as shown at CO₂ discharge point 82.

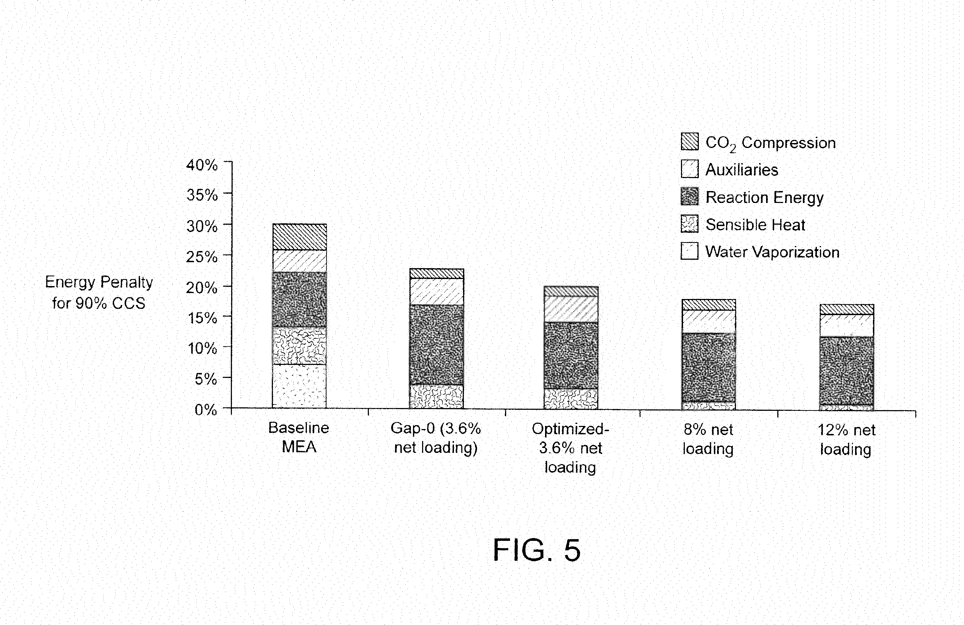

FIG. 5 illustrates the energy penalty (in the form of a water fall chart) for 90% carbon capture and sequestration system using different forms of post combustion capture, i.e., comparing a traditional monoethanol amine (MEA) process (without benefit of the subject invention) to the integrated silicon-amine processes. The water fall charts in FIG. 5 illustrate the benefit of using a absorbent having the potential to improve the performance of the CO₂ removal as described above. The term "Auxiliaries" in FIG. 5 refers to the electric power required to run auxiliary equipment, such as pumps, blowers, fans, etc. which are considered secondary unit operations. The term "NGCC" in FIG. 5 refers to a natural gas combined cycle. The term "CCS" refers to the amount of carbon capture and sequestration.

The first column of FIG. 5 defines a baseline for a conventional MEA absorbent and illustrates the effect of requiring higher amounts of water that must be mixed with the MEA absorbent prior to any MEA regeneration. The resulting energy penalty for the CO₂ separation is about 30% when using MEA in a conventional manner. In contrast, the absorbent identified in the second column of FIG. 5 (with 3.6% net loading) does not include any appreciable amount of water (as contemplated by the invention) and thus has a lower absorbent specific heat and higher heat of absorption for the CO₂. The pressure in the desorber has also been increased from 33 psia to about 200 psia.

The third column in FIG. 5 shows the effect of an optimization scheme that results in lowering the steam extraction temperature down from about 350°F down to about 260°F, resulting in faster reaction kinetics in the desorber. The last two columns of FIG. 5 are based on higher absorbent loadings according to the invention of 8% and 12%, respectively. The use of a silicon-amine absorbent in that manner thus reduces the energy penalty for carbon capture from 30% down to about 17.5%.

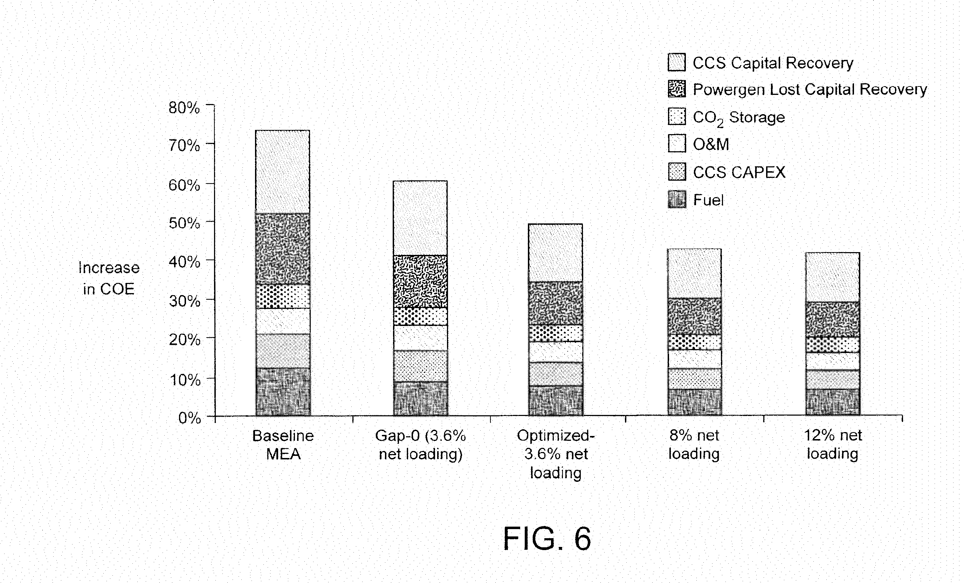

FIG. 6 of the drawings further illustrates the reduction in cost of energy (again in the form of a comparative water fall chart) for exemplary embodiments of the invention using the integrated amino-silicone process described above in connection with FIGs. 2-4. For post combustion capture in a traditional coal plant, the increase in cost of electricity ("COE") using a conventional MEA process as compared to a case without CO₂ separation as described herein is approximately 73%. The phase changing absorbent process thus has the potential to lower the cost of electricity production by about 40% over a case without CO₂ separation.

The data in FIG. 6 also shows that the absorbent is significantly better than a baseline MEA absorbent containing a substantial amount of water in that the absorbent will be about one half of a conventional MEA system. The optimization of the desorber and modularization also results in significantly lower capital cost for the CO₂ separation sub-system. The last two columns in FIG. 6 reflect about 8% and 12% net loading for systems using the integrated process of the invention.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

Various aspects and embodiments of the present invention are defined by the following numbered clauses:
1. A method for removing carbon dioxide from an exhaust gas stream, comprising the steps of:
   contacting said exhaust gas stream with a lean amino-silicone absorbent in an amount sufficient to react with a substantial portion of carbon dioxide present in said exhaust gas stream;
   forming a slurry comprising unreacted amino-silicone absorbent and carbamate compounds formed by the reaction of said lean amino-silicone absorbent with said carbon dioxide;
   heating said slurry to a temperature sufficient to cause the desorption of carbon dioxide from said carbamate compounds and to regenerate lean amino-silicone absorbent;
   sequestering desorbed carbon dioxide gas from said exhaust gas stream; and releasing said carbon dioxide gas.
2. The method of clause 1, further comprising the step of cooling said exhaust gas stream prior to contact with said lean amino-silicone absorbent.
3. The method of any preceding clause, wherein said steps of contacting said exhaust gas stream with an amino-silicone absorbent and forming said slurry occur in an absorber column.
4. The method of any preceding clause, further comprising the step of recycling regenerated lean amino-silicone absorbent to said absorber.
5. The method of any preceding clause, further comprising the steps of venting exhaust gas after said portion of carbon dioxide has been sequestered.
6. The method of any preceding clause, wherein said amino-silicone absorbent reacts with said carbon dioxide present in the flue gas to form carbamates according to the following general reaction: 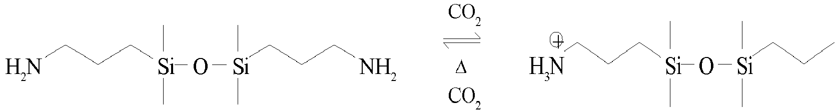
7. The method of any preceding clause, further comprising the step of pre-heating said slurry containing solid carbamates prior to said desorption step.
8. The method of any preceding clause, wherein said steps of contacting said exhaust gas stream with a lean amino-silicone absorbent, forming a slurry and heating said slurry are thermally integrated whereby a portion of said lean absorbent is combined with a rich absorbent stream from said absorber.
9. The method of any preceding clause, wherein the removal of carbon dioxide from said exhaust gas stream occurs as part of a continuous process.
10. The method of any preceding clause, wherein said exhaust gas stream comprises carbon dioxide, water, oxygen, nitrogen, argon, methane, carbon monoxide, SOₓ, NOₓ, ethane and minor amounts of other hydrocarbons.
11. A system for capturing carbon dioxide from an exhaust gas stream, comprising:
   an absorber operable to receive gas comprising carbon dioxide and react said carbon with a amino-silicone absorbent and form solid carbamates;
   a first separator unit for separating said solid carbamates and a portion of unreacted amino-silicone absorbent from said exhaust gas;
   a desorber for stripping carbon dioxide from said carbamates and regenerating lean amino-silicone absorbent;
   lean absorbent transport means sized to recycle said regenerated lean amino-silicone absorbent to said absorber; and
   a second separator unit for capturing and discharging carbon dioxide from said system.
12. A system for capturing carbon dioxide from an exhaust stream according to any preceding clause, further comprising a heat exchanger for increasing the temperature of said solid carbamates and said portion of unreacted amino-silicone absorbent upstream of said desorber.
13. A system according to any preceding clause, wherein said first separator unit and said absorber are integrated into a single process component.
14. A system according to any preceding clause, wherein said second separator includes recycle means for feeding entrained amino-silicone absorbent back to said desorber.
15. A system according to any preceding clause, further comprising a heat exchanger integral with said desorber for regenerating lean amino-silicone absorbent.
16. A system according to any preceding clause, further comprising recycle means for feeding entrained amino-silicone absorbent back to said absorber.
17. A system according to any preceding clause, further comprising a separator downstream of said desorber for isolating and discharging carbon dioxide gas from said system.
18. A system according to any preceding clause, wherein said first separator comprises a cyclone separator.
19. A system according to any preceding clause, wherein said first separator comprises a vapor-liquid slurry separator.
20. A system according to any preceding clause, further comprising pumping means for increasing the pressure of a mixture of solid carbamates and unreacted amino-silicone absorbent prior to feeding said mixture to said desorber.
21. A system according to any preceding clause, wherein said absorber reacts said amino-silicone absorbent with said carbon dioxide present in a flue gas to form carbamates according to the following general reaction: 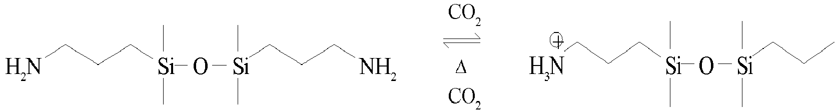
22. A system according to any preceding clause, wherein said desorber regenerates lean amino-silicone absorbent as a recycle stream to said absorber.
23. A system according to any preceding clause, wherein said exhaust gas stream comprises carbon dioxide, water, oxygen, nitrogen, argon, methane, carbon monoxide, SOₓ, NOₓ, ethane and minor amounts of other hydrocarbons.

## Claims

1. A method for removing carbon dioxide from an exhaust gas stream, comprising the steps of:
contacting said exhaust gas stream with a lean amino-silicone absorbent in an amount sufficient to react with a substantial portion of carbon dioxide present in said exhaust gas stream;
forming a slurry comprising unreacted amino-silicone absorbent and carbamate compounds formed by the reaction of said lean amino-silicone absorbent with said carbon dioxide;
heating said slurry to a temperature sufficient to cause the desorption of carbon dioxide from said carbamate compounds and to regenerate lean amino-silicone absorbent;
sequestering desorbed carbon dioxide gas from said exhaust gas stream; and releasing said carbon dioxide gas.

2. The method of claim 1, further comprising the step of cooling said exhaust gas stream prior to contact with said lean amino-silicone absorbent.

3. The method of claim 1 or claim 2, wherein said steps of contacting said exhaust gas stream with an amino-silicone absorbent and forming said slurry occur in an absorber column.

4. The method of claim 3, further comprising the step of recycling regenerated lean amino-silicone absorbent to said absorber.

5. The method of any preceding claim, further comprising the steps of venting exhaust gas after said portion of carbon dioxide has been sequestered.

6. The method of any preceding claim, wherein said amino-silicone absorbent reacts with said carbon dioxide present in the flue gas to form carbamates according to the following general reaction:

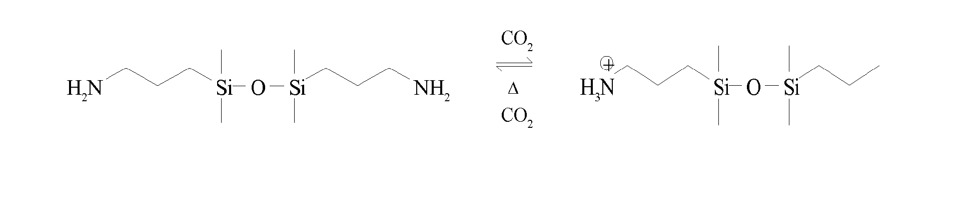

7. The method of any preceding claim, further comprising the step of pre-heating said slurry containing solid carbamates prior to said desorption step.

8. The method of any preceding claim, wherein said steps of contacting said exhaust gas stream with a lean amino-silicone absorbent, forming a slurry and heating said slurry are thermally integrated whereby a portion of said lean absorbent is combined with a rich absorbent stream from said absorber.

9. The method of any preceding claim, wherein the removal of carbon dioxide from said exhaust gas stream occurs as part of a continuous process.

10. The method of any preceding claim, wherein said exhaust gas stream comprises carbon dioxide, water, oxygen, nitrogen, argon, methane, carbon monoxide, SOₓ, NOₓ, ethane and minor amounts of other hydrocarbons.

11. A system for capturing carbon dioxide from an exhaust gas stream, comprising:
an absorber operable to receive gas comprising carbon dioxide and react said carbon with a amino-silicone absorbent and form solid carbamates;
a first separator unit for separating said solid carbamates and a portion of unreacted amino-silicone absorbent from said exhaust gas;
a desorber for stripping carbon dioxide from said carbamates and regenerating lean amino-silicone absorbent;
lean absorbent transport means sized to recycle said regenerated lean amino-silicone absorbent to said absorber; and
a second separator unit for capturing and discharging carbon dioxide from said system.

12. A system for capturing carbon dioxide from an exhaust stream according to claim 11, further comprising a heat exchanger for increasing the temperature of said solid carbamates and said portion of unreacted amino-silicone absorbent upstream of said desorber.

13. A system according to claim 11 or claim 12, wherein said first separator unit and said absorber are integrated into a single process component.

14. A system according to any one of claims 11 to 13, wherein said second separator includes recycle means for feeding entrained amino-silicone absorbent back to said desorber.

15. A system according to any one of claims 11 to 14, further comprising a heat exchanger integral with said desorber for regenerating lean amino-silicone absorbent.
